# EUROPEAN PATENT SPECIFICATION

(11) **EP 0 878 513 B1**
(45) Date of publication and mention of the grant of the patent: **05.11.2003**
(21) Application number: 98111099.2
(22) Date of filing: 24.05.1994
(51) Int. Cl.: C08L 101/00, C09D 7/12, C09D 201/00, B42D 15/00

(54) **A coating including natural organic substance fine powder**
Feines Pulver aus natürlicher, organischer Substanz enthaltendes Überzugsmittel
Composition de revêtement contenant une fine poudre d'une substance organique naturelle

(30) Priority: 24.05.1993 JP 12174393; 02.06.1993 JP 13192693; 08.06.1993 JP 13759893; 10.06.1993 JP 13844093; 27.12.1993 JP 33213293; 06.04.1994 JP 6852594; 06.04.1994 JP 6852694; 08.04.1994 JP 7061894; 22.04.1994 JP 8441294; 10.05.1994 JP 9632794; 17.05.1994 JP 10292494
(43) Date of publication of application: 18.11.1998
(62) Divisional of application: 94915283.9
(73) Proprietor: IDEMITSU PETROCHEMICAL CO. LTD., Tokyo 100 (JP)
(72) Inventor: Sano, Masahiro, Shirahama-sho, Himeji-shi, Hyogo-ken 672 (JP); Kusamoto, Nobuo, Shirahama-sho, Himeji-shi, Hyogo-ken 672 (JP); Fukatsu, Fumioki, Shirahama-sho, Himeji-shi, Hyogo-ken 672 (JP); Sasaki, Nobutaka, Chiba 5-chome, Minato-ku, Tokyo (JP); Ohyama, Shigeru, Osaka-shi, Osaka-fu, 530 (JP)
(74) Representative: Hucker, Charlotte Jane

(56) References cited:
- EP-A- 0 456 264
- EP-A- 0 480 362

## Description

This invention relates to a method for producing a substance including natural organic substance fine powder such as a silk fine powder, and can be used in plastics film or sheet, coating medium, fiber treatment agents and the like.

When writing or printing letter, numeral or graphic directly on plastic article, glassware, metal parts or the like, since the respective surfaces to be written or printed are too smooth to put thereon letters having clarity and abrasion resistance by using generally used ink.

Accordingly, when signing on a credit card or writing on a video cassette tape a recording date and contents thereof by using a water aqueous ink pen or ball point pen, it has been required to use paper labels capable of being stuck on them after written information thereon.

Otherwise, a white coating is preliminary put on a portion of the card and cassette tape to make a surface to be written. These coating materials are generally combined with silica for delustering.

However, in the conventional process by utilizing the labels, it was always necessary to prepare labels with adhesive agent and repaper to new one for every cards or cassette tapes, which is time-consuming and costly.

When using a coating material containing silica for writing, there will be disadvantages such that the written letters are easily defaced and unreadable (= poor grab or low abrasion resistance), the surface of the coating film is hard and causes slip, the touch feeling is bad and the like.

Especially, when written by water ink, the ink cannot be sucked in the material so that the ink is shed. As the ink after writing is late to be dried, so that the ink may run on the paper by touching with fingers to broke the written letters, and even after drying, the written letters still tends to be wiped off. Furthermore, the touch feeling is not so comfortable and write feeling is not fine.

Accordingly, it is the object of the present invention to provide a coating material forming an information display surface and products having surface to be written formed by coating material, which provides fine grab and touch feeling.

According to the present invention, a coating material forming an information display surface comprises a natural organic substance fine powder selected from the group consisting of silk powder, collagen powder, wool powder, cellulose powder, and chitin powder, and having an average particle diameter of at most 15µm.

The coating material forming information display surface is of a coating material defining medium when writing letters or printing on a plastic article, glassware and metal parts.

The particle diameter of natural organic substance fine powder may has a maximum particle diameter of at most 50 µm and an average particle diameter of 15 µm, preferably the maximum particle diameter of at most 20 µm and the maximum particle diameter of 10 µm and an average particle diameter of 3 µm. When making the average particle diameter small in size, the touch feeling and write feeling will be surely improved.

The content of the natural organic substance fine powder is recommended to be from 5 to 80 wt% by weight, preferably from 5 to 40 wt% by weight. Otherwisely, the content of the natural organic substance fine powder should be from 5 to 100 phr, preferably from 20 to 40phr against the coating material compound excepting fine powder. If less than 5phr, the water absorption by the natural organic substance fine powder will become insufficient to harm write feeling. On the contrary, if over 100phr, the solid state properties as coating material becomes worse (e.g., easy to be injured) and a laminating work becomes uncomfortable because of an increased viscosity.

As the coating materials, except natural organic substance fine powder, base resin, solvent medium, auxiliary and pigment can be included.

The base resin can selected widely in view of printing object and subject. For example, urethane resin, polyester resin, ethylene-vinyl acetate resin, acylic resin, urethane resin, vinyl resin, epoxy resin, chlorination polyolefine resin, cellulose resin and the like. These can be used in single or after mixing.

In order to increase brightness as the coloring pigment, Ti02 is mainly used, but silica, calcium carbonate and the like can be used as the loading pigment.

The solvent medium may be for example fatty series, ketone series, alcohol series, aromatic series or ethyl ether series. These are should be selected based upon kinds of resin, print object, printing process and object.

As the coating materials, except natural organic substance fine powder, base resin, solvent medium, auxiliary and pigment can be included.

As the auxiliary, there are anti-foaming agent, plasticity agent and the like. The selection of them should be based on purpose of auxiliary, print object and print condition. The purpose of the auxiliary is to reinforce the solid state properties of hide film and set property.

As the pigment, there are coloring pigment and loading pigment and used for coloring ink and matting. In order to increase brightness as the coloring pigment, TI02 is mainly used, but silica, calcium carbonate and the like can be used as the loading pigment. In the present invention, by loading natural organic substance fine powder, the water absorption is improved but when the water absorption exceeds, the color of ink may be light. In this state, by loading fine powdered loading pigment such as silica, calcium carbonate, the water absorption property can be controlled.

The product having surface to be written in accordance with the present invention is to have a surface to be written formed by the coating material forming information display surface.

But, coating method of the coating material is not limited, for example, screen printing, aniline process, pad print and the like are available.

The concrete product having surface to be written should be considered to be any substances having surface to be written such as cash card, credit card, audio cassette tape, video cassette tape, stationery product and the like.

The material for the product having surface to be written is not limited, for example, plastics, metal, wood and so on. The concrete plastics are polyvinyl dichloride resin, polystyrene resin, polyester resin, polyethylene resin, polypropylene resin, polycarbonate resin and the like.

The followings are the preferable Examples of coating materials forming information display surface.

### Example 1

A coating material forming information display surface is firstly prepared by mixing the following several materials; chlorination polyolefine, etc. as base resin 20wt% by weight, aromatic series solvent medium as solvent medium 45wt% by weight, anti-foaming agent, etc. as auxiliary 0.02wt% by weight, calcium carbonate 5wt% by weight as pigment, and silk fine powder as natural organic substance fine powder (Average particle diameter 7 µm) 30wt% by weight.

The prepared coating material is layered on a polycarbonate board to 0.5mm thick to obtain a sample to be evaluated regarding printing result, dried degree, grab, and organoleptic evaluation. The evaluation result will be shown in the following Tables 1-4.

The printing result, dried degree and organoleptic evaluation will be classified into 5 state, i.e., 5 ---Excellent, 4---Satisfactory, 3---Fair, 2---Inferior, 1---Quite inadequate as show in Tables.

The evaluation test for grab is conducted by applying a hardwearing properties test, in which the surface of the prepared sample is rubbed once by a shirting (member of cotton cloth for rubbing) to which a weighting of 100g is applied.

As tested writing materials, there are prepared three kinds writing materials such as a X-Y plotter (aqueous ink), fiber pen and felt pen (aqueous, oiliness).

The used X-Y plotter is named WX2400 produced by Graphic Company, of which feeding speed of recording chart is set at 1 cm/second and the input range is 0.5V.

The evaluation test regarding the organoleptic evaluation such as touch feeling, write feeling, clarity of letters were conducted by ordinary 12 persons selected at random.

### Examples 2 - 4

The coating material forming information display surface prepared in Example 2 uses a silk fine powder having an average particle diameter of 3 µm instead of the fine powder used in Example 1.

The coating material forming information display surface prepared in Example 3 is obtained by preparing or loading 4wt% by weight of the hydrophilic nature silica (average particle diameter is at most 3 µm) into the powder used in Example 1.

The coating material forming information display surface in accordance with Example 4 uses a collagen fine powder which can be prepared by processing the fine powder used in Example 1 so as to have an average particle diameter of 7 µm.

These samples in the respective Examples are also evaluated as Example 1 regarding printing result, dried degree, grab and organoleptic evaluation, of which results are shown in Tables 1-4.

### Comparative Examples 1, 2

The coating material forming information display surface prepared in Comparative Example 1 is obtain by preparing without silk fine powder in Example 1.

The coating material forming information display surface in accordance with Comparative Example 2 is prepared or changing the fine powder used in Example 1 to a hydrophilic nature silica having an average particle diameter of at most 3µm.

These samples in the respective Comparative examples are also evaluated as Example 1 regarding printing result, dried degree, grab and organoleptic evaluation, of which results are shown in Tables 1-4.

**[Table 1 ]**

| Properties in the X-Y plotter | | | |
|---|---|---|---|
| | PRINTING RESULT | DRIED DEGREE | GRAB AFTER 4 HOURS |
| EXAMPLE 1 | 3 | 3 | COMPLETE |
| EXAMPLE 2 | 4 | 4 | COMPLETE |
| EXAMPLE 3 | 5 | 5 | COMPLETE |
| EXAMPLE 4 | 3 | 4 | COMPLETE |
| COM. EXAMPLE 1 | 1 | 1 | INSUFFICIENT DUE TO NON-DRY |
| COM. EXAMPLE 2 | 3 | 2 | INSUFFICIENT DUE TO SHORT DRY |
| Note: "COM. EXAMPLE" means "COMPARATIVE EXAMPLE" | | | |

**[Table 2 ]**

| Properties in the fiber pen | | | | |
|---|---|---|---|---|
| | PRINTING RESULT | DRIED DEGREE | GRAB AFTER 1 HOURS | DRYING TIME |
| EXAMPLE 1 | 3 | 4 | COMPLETE | AT MOST 6 HOURS |
| EXAMPLE 2 | 4 | 4 | COMPLETE | AT MOST 6 HOURS |
| EXAMPLE 3 | 5 | 5 | COMPLETE | AT MOST 6 HOURS |
| EXAMPLE 4 | 3 | 3 | COMPLETE | AT MOST 6 HOURS |
| COM. EXAMPLE 1 | 1 | 1 | INSUFFICIENT DUE TO NON-DRY | NON-DRY AFTER 24 HOURS |
| COM. EXAMPLE 2 | 3 | 2 | INSUFFICIENT DUE TO SHORT DRY | NON-DRY AFTER 24 HOURS |
| Note: "COM. EXAMPLE" means "COMPARATIVE EXAMPLE" | | | | |

**[Table 3]**

| Properties in the felt pen | | | | |
|---|---|---|---|---|
| | OILINESS FELT PEN | | AQUEOUS FELT PEN | |
| | DRIED DEGREE | CLARITY | DRIED DEGREE | CLARITY |
| EXAMPLE 1 | 3 | 3 | 3 | 3 |
| EXAMPLE 2 | 3 | 4 | 4 | 3 |
| EXAMPLE 3 | 3 | 5 | 5 | 5 |
| EXAMPLE 4 | 3 | 3 | 3 | 3 |
| COM. EXAMPLE 1 | 3 | 1 | 1 | 1 |
| COM. EXAMPLE 2 | 3 | 2 | 2 | 3 |
| Note: "COM. EXAMPLE" means "COMPARATIVE EXAMPLE" | | | | |

**[Table 4]**

| Organoleptic evaluation | | | |
|---|---|---|---|
| TOUCH FEELING | | WRITE FEELING | CLARITY OF WRITTEN LETTER |
| EXAMPLE 1 | 4 | 4 | 3 |
| EXAMPLE 2 | 5 | 5 | 3 |
| EXAMPLE 3 | 3 | 4 | 5 |
| EXAMPLE 4 | 4 | 4 | 3 |
| COM. EXAMPLE 1 | 1 | 1 | 1 |
| COM. EXAMPLE 2 | 2 | 2 | 3 |
| Note: "COM. EXAMPLE" means "COMPARATIVE EXAMPLE" | | | |

As can be understood from the above properties, the coating material forming information display surface in accordance with the Examples 1-4 shows good results in printing, dried degree, grab and organoleptic evaluation since they contain the silk fine powder or the collagen fine powder, respectively. In accordance with Example 3, the properties can be improved when the natural organic substance fine powder along with the silica is applied.

But, inspecting the coating material forming information display surface in Comparative Example 1. they does not show good results in printing, dried degree, grab and organoleptic evaluation since they do not contain the natural organic substance fine powder.

In accordance with the coating material forming information display surface in Comparative example 2, since the natural inorganic substance fine powder is contained in stead of the natural organic substance fine powder, the excellent results as in the natural organic substance fine powder can not be obtained.

Though the coating material forming information display surface in Examples 1-4 uses the silk fine powder or the collagen fine powder selected from the natural organic substance fine powders in accordance with the present invention, the same effect can be achieved by keratin fine powder, wool fine powder, cellulose fine powder, cotton fine powder, hemp yarn fine powder, chitin fine powder, chitosan fine powder other than the natural organic substance fine powder.

The coating materials forming information display surface using these fine powders are also evaluated regarding printing result and grab as in Examples 1-8, which is shown in Table 5. The column of "EVALUATION" should be understood as to be an overall evaluation based on items such as clarity of written letters, dried degree, grab (abrasion resistance). The evaluation standards is the same as in the above-mentioned printing result.

**[Table 5]**

| Properties in several powders | | | |
|---|---|---|---|
| KIND 0F POWDER | PRINTING RESULT | GRAB AFTER 1 HOURS | EVALUATION |
| KERATIN | GOOD | DRIED, FIXED | 4 |
| WOOL | GOOD | DRIED, FIXED | 4 |
| CELLULOSE | GOOD | DRIED, FIXED | 4 |
| COTTON | GOOD | DRIED, FIXED | 4 |
| HEMP YARN | GOOD | DRIED, FIXED | 4 |

The followings are Examples of products having surface to be written.

### Example 5

In this Example, a cowhide after aldehyde tanning to keep brightness is used. The cowhide is crushed and degreased and then deformed into a collagen fine powder having an average particle diameter of 15 µm through another crushing process, fine process and ultrafine process.

The coating material is arranged by several materials such as polyester resin as base resin by 20phr, aromatic series solvent medium (Inflammation point 47°C) as solvent medium by 45phr, TiO2 and talc as pigment by 2.5phr respectively and the collagen fine powder as natural organic substance fine powder by 30phr.

Incidentally, the compound ration can be adjusted as the following range, that is, when 5phr of pigment and 20phr of base resin will be compounded, the natural organic substance fine powder will be necessary by from 5 to 100phr, preferably from 20 to 40phr and the solvent medium will be by from 20 to 40phr, preferably by 45phr.

The above-mentioned coating material will be screen printing on a polycarbonate plate as a sample of product. The screen should be understood to be defined by 180 mesh-monofilament. The coating film is applied into drying process for 20 minutes at 60°C to obtain a sample product formed with a surface to be written in this Example.

The formed surface to be written of this sample will be evaluated regarding repellent property, dried degree, touch feeling, write feeling and pad printing suitability. Those results will be shown in Table 6. The repellent property will be evaluated how the ink is shed when writing letters on the surface to be written by means of an aqueous ink pen and ball point pen. The legend "○" means non-presence of repellent state and "×" does presence of repellent state.

The dried degree is evaluated such that after writing letters on the surface to be written by means of an aqueous ink pen and ball point pen, how the surface will be stained when rubbing with a weighting of 100g due to an unstable state of the ink on the surface to be written. The evaluation of the dried degree is done by three legend; " ○ " means enough, "Δ" means average and "×" means insufficient.

The touch feeling is evaluated by 10 male and female persons when touching the surface to be written. The legend "ⓞ" means excellent, "○" means fine, "Δ" means average and "×" means uncomfortable.

The write feeling is evaluated by 10 male and female persons when writing letters of the surface to be written. The legend "ⓞ" means excellent, "○" means fine, "Δ" means average and "×" means uncomfortable.

The pad printing suitability is classified by "○" meaning fine, " Δ " meaning average and " × " meaning insufficient.

The column of "EVALUATION" is classified by "ⓞ" meaning excellent, "○" meaning fine, "Δ" meaning average and "×" meaning uncomfortable.

### Examples 6-8

In Example 6, the natural organic substance fine powder in Example 5 is deformed into a collagen fine powder state having an average particle diameter of 6 µm but other item are the same to thereby obtain a sample of product having a surface to be written.

In Example 7, the natural organic substance fine powder in Example 5 is deformed into a collagen fine powder having an average particle diameter of 3 µm but other item are the same to thereby obtain a sample of product having a surface to be written.

In Example 8, the natural organic substance fine powder in Example 5 is deformed into a silk fine powder having an average particle diameter of 5 µm but other items are the same to thereby obtain a sample of product having a surface to be written.

The surfaces of the written made on samples of the respective examples are also evaluated regarding several properties as Example 5, of which results are shown in Table 6.

### Comparative Examples 3,4

In Comparative Example 3, the coating material is prepared without natural organic substance fine powder in Example 5 and others are maintained to obtain a sample to product having surface to be written.

In Comparative Example 4, the natural organic substance fine powder used in Example 5 is made a silica fine powder having an average particle diameter of 5 µm and the others are maintained to obtain a sample to product having surface to be written.

The surfaces to be written of the samples prepared in comparative examples are also evaluated regarding several properties as Example 5, of which results are shown in Table 6.

**[Table 6]**

| | REPELLENT PROPERTY | | DRIED DEGREE | | TOUCH FEELING | WRITE FEELING | PAD PRINTING SUITABILITY | EVALUATION |
|---|---|---|---|---|---|---|---|---|
| | INK PEN | BALL POINT PEN | INK PEN | BALL POINT PEN | | | | |
| EXAMPLE 5 | ○ | ○ | ○ | ○ | ○ | Δ | Δ | ○ |
| EXAMPLE 6 | ○ | ○ | ○ | ○ | ○ | ○ | Δ | ○ |
| EXAMPLE 7 | ○ | ○ | ○ | ○ | ⓞ | ⓞ | O | ⓞ |
| EXAMPLE 8 | ○ | ○ | ○ | ○ | O | O | Δ | ○ |
| COM. EXAMPLE 3 | | ○ | × | × | Δ | × | ○ | × |
| COM. EXAMPLE 4 | ○ | ○ | Δ | Δ | Δ | Δ | Δ | Δ |
| Note: "COM. EXAMPLE" means "COMPARATIVE EXAMPLE" | | | | | | | | |

As can be expected from evaluations regarding properties, in accordance with products having surface to be written, the coating material of surface to be written contains collagen fine powder of silk fine powder, it shows sufficient results regarding repellent property, dried degree, touch feeling, write feeling and pad printing suitability.

According to Examples 5 - 7, by using small collagen fine powder having an average particle diameter of about 3 µm, the touch feeling and write feeling will be improved.

While, in accordance with the product having surface to be written in Comparative Example 3, there is no natural organic substance fine powder in the coating material of the surface to be written, so that it can be understood that a repellent property when writing with an aqueous ink pen, a dried degree and write feeling when writing an aqueous ink pen and ball point pen are not good.

In accordance with the product having surface to be written in Comparative Example 4, the fine powder contained in coating material of the surface to be written is not a natural organic substance fine powder but a natural inorganic substance fine powder, so that it can be understood that a dried degree, touch feeling and write feeling are poor comparing with those in a natural organic substance fine powder.

### Industrial Utility

The invention, owing to the incorporation of fine silk powder or like fine natural organic material powder, is excellent in the moisture absorbing/releasing property, moisture permeability and touche sense, and is particularly suitable for application to plastic films and sheets, various moldings, paints, fiber treating materials, etc. which are frequently touched by the hand.

## Claims

1. A coating material forming an information display surface, the coating material comprising a natural organic substance fine powder selected from the group consisting of silk powder, collagen powder, wool powder, cellulose powder, and chitin powder, and having an average particle diameter of at most 15µm.

2. A product having a surface to be written on, which is formed by the coating material forming information display surface according to claim 1.

## Patentansprüche

1. Überzugsmaterial, welches eine Informationsanzeigeoberfläche bildet, wobei das Überzugsmaterial ein Feinpulver mit einer natürlichen organischen Substanz enthält, welche ausgewählt ist aus einer Gruppe, die Seidenpulver, Kollagenpulver, Wollpulver, Zellulosepulver und Chitinpulver umfaßt, und einen durchschnittlichen Teilchendurchmesser von höchstens 15 µm aufweist.

2. Erzeugnis mit einer zu beschreibenden Oberfläche, welche gebildet ist aus dem Überzugsmaterial, welches die Informationsanzeigeoberfläche gemäß Anspruch 1 bildet.

## Revendications

1. Matériau de revêtement formant une surface d'affichage d'informations, le matériau de revêtement comprenant une fine poudre de substance organique naturelle choisie dans le groupe constitué de la poudre de soie, la poudre de collagène, la poudre de laine, la poudre de cellulose et la poudre de chitine, et 'ayant un diamètre de particule moyen d'au plus 15 µm.

2. Produit ayant une surface sur laquelle on doit écrire, qui est formé par le matériau de revêtement formant une surface d'affichage d'informations selon la revendication 1.
